# EUROPEAN PATENT SPECIFICATION

(11) **EP 2 628 766 B1**
(45) Date of publication and mention of the grant of the patent: **12.03.2014**
(21) Application number: 13460001.4
(22) Date of filing: 28.01.2013
(51) Int. Cl.: C08K 5/52, C08G 59/50, C08L 63/00, C08K 5/521

(54) **Methods of preparing modifiers for liquid epoxy resins and reducing flammability thereof**
Verfahren zur Herstellung von Modifizierern für flüssige Epoxidharze und Verringerung der Entflammbarkeit davon
Procédés pour préparer des modificateurs pour résines époxy liquides et en réduire l'inflammabilité

(30) Priority: 14.02.2012 PL 39810112
(43) Date of publication of application: 21.08.2013
(73) Proprietor: Politechnika Rzeszowska im. Ignacego Lukasiewicza, 35-959 Rzeszów (PL); POLITECHNIKA WARSZAWSKA, 00-661 Warszawa (PL)
(72) Inventor: Galina, Henryk, 35-213 Rzeszów (PL); Oleksy, Mariusz, 35-083 Rzeszów (PL); Heneczkowski, Maciej, 35-603 Rzeszów (PL); Florjanczyk, Zbigniew, 05-820 Piastów (PL); Debowski, Maciej, 05-510 Konstancin-Jeziorna (PL); Lokaj, Krzysztof, 11-041 Olsztyn (PL)
(74) Representative: Warzybok, Tadeusz

(56) References cited:
- WO-A1-2008/064115
- KICKO-WALCZAK E.; JANKOWSKI P.: "Effect of halogen free modification of epoxy resins on their fire retardancy levels", POLIMERY, [Online] vol. 50, no. 11-12, 2005, pages 860-867, XP002695874, Retrieved from the Internet: URL:http://en.www.ichp.pl/polimery-effect- of-halogen-free-modification-epoxy-resins- > [retrieved on 2013-04-23]
- K. A. AMDRIANOV ET AL: "Formation and properties of aluminum salts of ethoxymethylphosphonic and diethylphosphoric acids", BULLETIN OF THE ACADEMY OF SCIENCES OF THE USSR; DIVISION OF CHEMICAL SCIENCES, vol. 14, no. 1, 1965, pages 174-176, XP055060656, ISSN: 0568-5230, DOI: 10.1007/BF00854887

## Description

The subject of present invention is the method of preparing liquid epoxy resin modifiers that are environment friendly and using them to reduce flammability of the resins suitable for preparation of composites featuring excellent mechanical properties and improved fire resistance.

In the epoxy resin technology the structure of resins was modified so far by introducing flame depressants, so called antipirenes, directly into the polymer chain. The antipirents contained elements from fluorine group, particularly bromine, e.g. in the form of brominated bisphenol A.

At present, however, as all construction elements in public means of transportation are the subject of very strict rules concerning gases and smokes that may be released in the case of fire, the use of halogen containing antipirenes has been banned. These banned additives are to be replaced by more environment friendly compounds containing such heteroatoms as phosphorus, nitrogen, silicon, boron or hydroxides of light metals such as aluminum or magnesium. Many of such novel halogen-free modifiers were described as improving, in particular, flame resistance of epoxy resin. The examples provide the compounds described in the paper: Kicko-Walczak E. and Jankowski P., Polimery 2005, 50 (11-12), 860-7, such as ammonium polyphosphate, melamine polyphosphates aluminum hydroxide, zinc borate, mixtures of di- and tri-phosphates of cyclic organic compounds, preferably with additives containing various heteroatoms in order to exploit a synergistic effect. Due to insolubility and poor compatibility of the compounds with the modified resin, however, their major disadvantage is the difficulty in providing their sufficiently homogeneous distribution within the resin and the tendency to sediment when stored. All these factors reduce the effectiveness and comfort of application.

The disadvantages of the described above methods of reducing flammability of epoxy resins are eliminated by the method of the present invention.

According to this method, an alkyl or aryl derivative of aluminum phosphate is dissolved in an aliphatic polyamine, preferably at the molar ratio of 0.1 : 30 at the temperature of 20 to 130°C, while, preferably, keeping the system under nitrogen should the temperature be above 60°C, followed by filtering the product. The resulting solution is introduced, as a modifier, into low-molecular-weight epoxy resin of epoxide number of 4 to 6 mol/kG in the amount of 10 - 14 wt.%, while effectively mixing until the components form a clear mixture and the said mixture is cast into suitable molds and left to harden at room temperature for at least 20 hrs., followed by post-cure at 80 to 100°C, preferably at 100°C, for another 3 to 6 hrs.

The thus obtained compositions have optimal properties and are suitable for various construction applications. The cured epoxy compositions containing 1.5 wt.% of aluminium tris(diethylphospate) have the limiting oxygen index of 21.3 vs. 19.8 for the unmodified epoxy composition. Simultaneously, the stiffness of the cured samples, expressed in terms of Young's modulus, increased by 14% with the impact and tensile strengths practically unchanged.

The liquid epoxy compositions prepared according to the invention are also suitable for impregnating glass, carbon or other types of fibrous reinforcements thus preparing composites of excellent mechanical properties and reduced flammability to be applied as construction elements by aerospace and/or automobile industries as well as for constructing hulls of boats or vessels.

The idea of the invention in presented in the following examples.

### Example I

In a closed reactor, purged with nitrogen or other inert gas, 50 g of powdered aluminum tris(diethylphosphate) and 500 mL of triethylenetetramine is placed and heated up, while stirring to 130°C and kept in that temperature for 4 hrs. After completing the reaction, i.e. obtaining a clear solution of aluminum tris(diethylphosphate) in triethylenetetramine, the content of the reactor is cooled down to room temperature and filtered through flattered filter paper to obtain the product: the environment-friendly flame retardant for epoxy resins. The thus obtained modifier is added in the amount of 1.0 wt.% to a liquid bisphenol A based epoxy resin (epoxide number ca. 5.5 mole/kG) along with 12 wt.% of triethylenetetramine hardener and 12 wt.% of diluent, a mixture of xylene isomers. The composition is thoroughly mixed and poured into molds where the room temperature curing is taking place. After 24 hrs. the pre-hardened samples are taking out from molds and post-cured at 100°C for 4 hrs. After cooled down and seasoned for 24 hrs. at room temperature the samples reach their final properties. These include improved flame resistance of the samples containing the modifier being the subject of present invention, as evidenced by their significantly increased limiting oxygen index as compared to that of samples prepared from unmodified epoxy resin. The mechanical properties of the modified samples remain excellent.

### Example II

In a reactor 50 g of powdered aluminum tris(diethylenephosphate) is placed together with 500 mL of triethylenetetramine and kept at room temperature for 24 hrs., while stirring. After complete dissolution of aluminum tris(diethylenephosphate), the mixture is filtered to obtain the modifier: an environment friendly flammability reducing agent. The thus obtained modifier is added in the amount of 1.5 wt.% to a liquid composition containing a bisphenol A based low molecular weight epoxy resin of epoxide number of 5.2 mol/kG together with 12 wt.% of triethylenetetramine and 12 wt.% of a diluent and then the process is carried out as in Example I.

The basic properties of cured compositions prepared as in Examples I and II are presented in Table 1.

**Table 1.**

| Amount of modifier added to liquid epoxy resin* and 12% of TETA [wt. %] | Impact strength [kJ/m²] | Tensile strength at break [MPa] | Elongation at break, [%] | Young's Modulus, [GPa] | Limiting Oxygen Index |
|---|---|---|---|---|---|
| 0.0 | 7.03 | 35.59 | 2.5 | 3.19 | 19.8 |
| 1.0 | 7.17 | 25.19 | 1.1 | 2.93 | 19.9 |
| 1.5 | 6.26 | 36.97 | 1.1 | 3.62 | 21.3 |

| | | | | | |
|---|---|---|---|---|---|
| *bisphenol A based epoxy resin of epoxide number of 5.5 mole/kG was used | | | | | |

### Example III

In a reactor, 60 g of powdered aluminum tris(diethylenephosphate) is placed together with 500 mL of triethylenetetramine and kept while stirring for 24 hrs. The homogeneous mixture is the filtered through filter paper to obtain the environment friendly flammability reducing modifier of epoxy resins. The thus obtained modifier is added in the amount of 1.0 or 1.5 wt.% to a liquid epoxy resin composition of epoxy number ca. 5.2 along with the stoichiometric amount of triethylenetetramine (ca. 12 wt.%) and 12 wt.% of reactive diluent: phenyl-glycidyl ether, or unreactive diluent: a mixture of xylene isomers. The composition is thoroughly mixed, poured to molds, and kept for 24 hrs. until well hardened. Then the pre-hardened samples are additionally 'high-temperature' cured at 100°C. After cooled down to room and temperature and 48 hrs. seasoning the samples reached their final properties.

The properties of the cured samples are presented in Table 2

**Table 2**

| Amount of modifier added to liquid epoxy resin* and 12% of TETA [wt. %] | Impact Strength [kJ/m²] | Tensile Strength at Break [MPa] | Elongation at Break, [%] | Young's Modulus, [GPa] | Limiting Oxygen Index |
|---|---|---|---|---|---|
| 0.0 | 7.03 | 35.59 | 2.5 | 3.19 | 19.8 |
| 1.0¹⁾ | 7.20 | 43.43 | 1.2 | 4.48 | 21.0 |
| 1.5²⁾ | 5.85 | 39.88 | 2.1 | 3.00 | 21.5 |

| | | | | | |
|---|---|---|---|---|---|
| *bisphenol A based epoxy resin of epoxide number of 5.2 mole/kG was used ¹⁾ Composition containing 12 wt.% of phenyl-glycidyl ether as reactive diluent ²⁾ Composition containing 12 wt.% of xylene as unreactive diluent | | | | | |

The properties of the samples prove an enhancement of the flame resistance of epoxy compositions obtained according to the invention as exemplified by increase of the limiting oxygen index. The mechanical properties of the samples are also improved.

## Claims

1. The method of manufacturing modifiers of liquid epoxy resins capable of reducing flammability of the products obtained from the said resins involving dissolution of an alkyl or aryl derivative of aluminum phosphate in an aliphatic polyamine, preferable at the molar ratio of 0.1:30 at temperature of 20 to 130°C, while, preferably, keeping the system under nitrogen should the temperature used be above 60°C, followed by filtering the product and introducing the resulting solution, as a modifier, into low-molecular-weight epoxy resin of epoxide number of 4 to 6 mol/kG in the amount of 10 - 14 wt.%, while effectively mixing until the components form a clear mixture and the said mixture is cast into suitable molds and left to harden at room temperature for at least 20 hrs., followed by post-cure at 80 to 100°C, preferably at 100°C, for another 3 to 6 hrs.

## Patentansprüche

1. Verfahren zur Herstellung von Modifikatoren für flüssige Epoxidharze und zum Flammfestmachen von diesen Harzen mit Hilfe dieser Modifikatoren, **dadurch gekennzeichnet, dass** ein Alkyl-oder Arylderivat von Aluminiumphosphat in einem aliphatischen Polyamin gelöst wird, vorzugsweise in einem molaren Verhältnis von 0,1:30 bei einer Temperatur von 20 bis 130° C, wobei im Falle der Durchführung der Reaktion bei einer Temperatur von über 60° C bevorzugt ein inertes Gaspolster verwendet wird und das Produkt nach der Reaktion durch Filtration gereinigt wird, die so erhaltene Lösung dann als Modifikator unter sorgfältigen Rühren bis zur vollständigen Auflösung in ein niedermolekulares Epoxidharz mit einer Epoxidzahl von 0,4 bis 0,6 Mol/100g in einer Menge von 10 bis 14 Gew.% eingebracht wird, und aus der Zusammensetzung Formteile gegossen und anschließend bei Raumtemperatur mindestens 20 Stunden ausgehärtet werden, wonach innerhalb von 3 bis 6 Stunden eine zusätzliche Härtung der Zusammensetzung bei einer erhöhten Temperatur von 80 bis 100° C, vorzugsweise bei 100° C, durchgeführt wird.

## Revendications

1. La méthode de l'obtention des modificateurs des résines époxydes liquides capable de réduire l'inflammabilité de ces produits **caractérisé en ce que**, le dérivé alkylique ou arylique de phosphate d'aluminium est dissout dans la polyamine aliphatique, de préférence au rapport molaire 0.1:30 à la température de 20 à 130°C, au cas où la température en cours de réaction est au-dessus de 60° C, il est avantageux d'utiliser le coussin de gaz neutre et après avoir terminé la réaction le produit est purifié par la filtration. La solution obtenue ainsi, en tant que modificateur, est introduite à la résine époxyde à molécules fines dont l'indice d'époxyde est de 4 à 6 mol/kG en quantité de 10 - 14% massiques, en mélangeant jusqu'à la dissolution complète et puis des pièces moulées en sont coulées, pour être ensuite durcies à la température ambiante pendant au moins 20 heures, puis un durcissement supplémentaire de la composition est fait à la température plus élevée de 80 100° C, de préférence à 100°C pendant 3 à 6 heures.
